# EUROPEAN PATENT SPECIFICATION

(11) **EP 3 795 412 B1**
(45) Date of publication and mention of the grant of the patent: **07.02.2024**
(21) Application number: 19802955.5
(22) Date of filing: 25.04.2019
(51) Int. Cl.: B60L 7/16, B60L 58/12, B60L 58/22, H02J 7/00, H02J 7/02

(54) **POWER SUPPLY SYSTEM**
STROMVERSORGUNGSSYSTEM
SYSTÈME D'ALIMENTATION

(30) Priority: 14.05.2018 JP 2018092865
(43) Date of publication of application: 24.03.2021
(73) Proprietor: HONDA MOTOR CO., LTD., Minato-ku Tokyo 107-8556 (JP)
(72) Inventor: TAKIZAWA Daijiro, Wako-shi, Saitama 351-0193 (JP); MATSUMOTO Takeshi, Wako-shi, Saitama 351-0193 (JP); FUJIYAMA Takashi, Wako-shi, Saitama 351-0193 (JP)
(74) Representative: Weickmann & Weickmann PartmbB
(86) International application number: PCT/JP2019/017551
(87) International publication number: WO 2019/220906

(56) References cited:
- JP-A- 2011 229 333
- JP-A- 2013 038 960
- JP-A- 2014 079 095
- JP-A- 2015 027 158
- JP-A- 2016 171 658
- JP-A- 2017 192 272
- JP-B2- 5 987 892
- US-A1- 2017 151 886
- US-A1- 2017 282 899

## Description

### Technical Field

The present invention relates to a power supply system that controls the input/output of power to/from a plurality of batteries, by controlling a plurality of input/output adjustment apparatuses that are electrically connected between the plurality of batteries and a load.

### Background Art

Japanese Laid-Open Patent Publication No. 2017-099242 discloses a power supply system using two different types of batteries, which are an output-type battery and a capacitance-type battery, the power supply system maintaining the output of the batteries during motoring and maintains reception of power by the batteries during regeneration, by controlling the SOC (State Of Charge) of the output-type battery.

Japanese Laid-Open Patent Publication No. 2015-220772 discloses a power supply system that includes a first power accumulator (main battery) that is high-output and high-cost and a plurality of second power accumulators (sub batteries) that have relatively low internal resistance values and are low-cost, with the sub batteries being attachable to and detachable from the power supply system.
US 2017/151886 A1 shows a power supply system comprising: a plurality of batteries; a plurality of input/output adjustment apparatuses that are electrically connected between the plurality of batteries and a load; and a control apparatus that controls input/output of power to/from the plurality of batteries by controlling the plurality of input/output adjustment apparatuses, wherein: during motoring in which power is output from the plurality of batteries to the load via the plurality of input/output adjustment apparatuses, the control apparatus controls the plurality of input/output adjustment apparatuses to output the power with priority from a battery whose SOC exceeds a threshold value among the plurality of batteries; and during regeneration in which power is input from the load to the plurality of batteries via the plurality of input/output adjustment apparatuses, the control apparatus controls the plurality of input/output adjustment apparatuses to input the power with priority to a battery whose SOC is less than or equal to the threshold value.

### Summary of Invention

In a case where a plurality of the same types of batteries are connected in parallel to the load, such as the sub batteries in Japanese Laid-Open Patent Publication No. 2015-220772, if there is variation in the SOC among these batteries, the outputs of the batteries having low SOCs or battery voltages drag down and lower the output of the overall power supply system.

If the SOC of each of these batteries is caused to match by transferring power among the batteries, power loss occurs in the DC/DC converter (input/output apparatus) that controls the input/output of power to/from the batteries, the wires, and the battery pack that houses the batteries, thereby lowering the power efficiency.

On the other hand, Japanese Laid-Open Patent Publication No. 2017-099242 discloses a method for controlling the SOC among two types of batteries having different characteristics for the output-type batteries and the capacitance-type batteries, but does not disclose any method for controlling the SOC among a plurality of batteries that are the same type.

Accordingly, there is a desire to control not only the SOC among batteries of different types, but also to control the SOC among batteries of the same type.

The present invention has been devised in order to solve this type of problem, and has the object of providing, a power supply system capable of suitably controlling the SOC among a plurality of batteries.

The present invention provides a power supply system according to claim 1.

According to the present invention, output from batteries with low SOCs is restricted during motoring, and power is input with priority to the batteries with low SOCs to recover the SOCs during regeneration. Therefore, it is possible to suppress variation in the SOC among the plurality of batteries, and to improve the output of the power supply system that includes the plurality of batteries.

Furthermore, even when there is variation in the SOC among the plurality of batteries, the SOCs are recovered without transferring power around, and therefore it is possible to suppress a drop in power efficiency.

Thus, in the present invention, it is possible to suitably control the SOC among a plurality of batteries.

### Brief Description of Drawings

FIG. 1 shows a configuration of a power supply system according to the present embodiment;
FIG. 2 is a conceptual diagram of the SOCs of a plurality of first batteries;
FIG. 3 shows a relationship between the SOCs and burden rates of the plurality of first batteries, during motoring and during regeneration;
FIG. 4 shows a relationship between the SOCs and burden rates of the plurality of first batteries, during motoring and during regeneration;
FIG. 5 is a flow chart showing operation during motoring;
FIG. 6 is a flow chart showing operation during regeneration;
FIG. 7 is a flow chart showing operation during motoring according to a modification;
FIG. 8 is a flow chart showing operation during motoring according to the modification;
FIG. 9 is a flow chart showing operation during regeneration according to the modification; and
FIG. 10 is a flow chart showing operation during regeneration according to the modification.

### Description of Embodiments

The following describes examples of preferred embodiments of a power supply system according to the present invention, while referencing the accompanying drawings.

### [1. Configuration of the Present Embodiment]

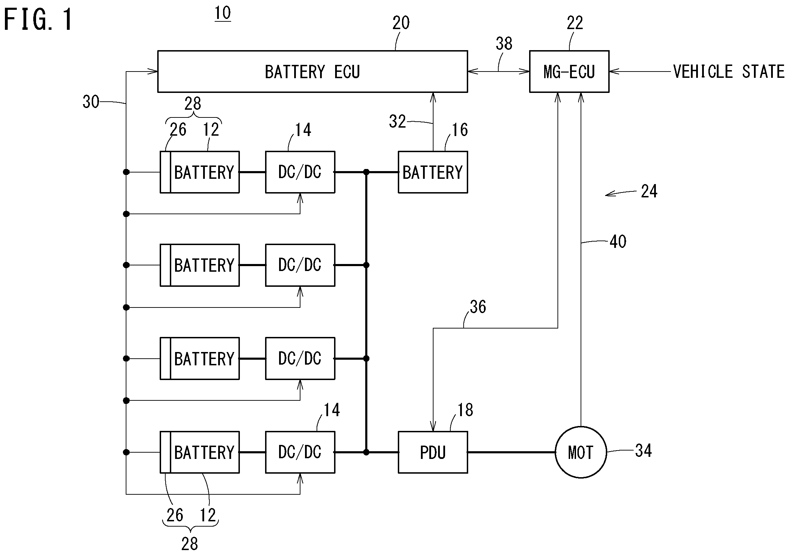

As shown in FIG. 1, a power supply system 10 according to the present embodiment includes a plurality of first batteries 12, a plurality of DC/DC converters (input/output adjustment apparatuses) 14, a second battery 16, a power drive unit (PDU) 18, a battery ECU (control apparatus) 20, and a motor generator ECU (MG-ECU) 22. The power supply system 10 is used in an electric vehicle 24 such as a motorcycle, a three-wheel vehicle, or a four-wheel vehicle, for example.

The plurality of first batteries 12 are attachable/detachable batteries that can be attached to and detached from the electric vehicle 24. Specifically, each of the plurality of first batteries 12 is housed in a battery pack 28 that includes a battery management system (BMU) 26 that monitors the first batteries 12. By attaching/detaching the battery pack 28 to/from the electric vehicle 24, the plurality of first batteries 12 can be attached to and detached from the electric vehicle 24. The plurality of first batteries 12 may be the same type of battery, or may be different types of batteries from each other. Furthermore, the number of first batteries 12 shown in FIG. 1 is just an example, and the power supply system 10 may include two or more first batteries 12.

The plurality of BMUs 26 sequentially detect the battery voltage, battery current, and temperature of the first batteries 12, using sensors (not shown in the drawings). These states of the first batteries 12 are sequentially transmitted from the plurality of BMUs 26 to the battery ECU 20, via a communication line 30.

The plurality of DC/DC converters 14 have first-order sides that are electrically connected to any one of the first batteries 12 among the plurality of first batteries 12, and second-order sides that are electrically connected to the PDU 18. Accordingly, the plurality of DC/DC converters 14 are connected in parallel to the PDU 18. By raising/lowering the battery voltages of the first batteries 12 connected on the first-order side, the plurality of DC/DC converters 14 adjust the voltage (output voltage) output to the PDU 18 to be a desired output voltage value and adjust the current (output current) flowing through the PDU 18 to be a desired output current value. Furthermore, the DC/DC converters 14 sequentially transmit their own states to the battery ECU 20, via the communication line 30.

The second battery 16 is a fixed battery included in the electric vehicle 24. The battery voltage, battery current, and temperature of the second battery 16 are also detected by sensors (not shown in the drawings). These states of the second battery 16 are sequentially transmitted to the battery ECU 20, via the communication line 32. It should be noted that the second battery 16 is not a strictly necessary configurational element, as described further below.

The PDU 18 is configured to include a three-phase bridge inverter. The plurality of DC/DC converters 14 and the second battery 16 are connected in parallel to the input side of the PDU 18. A motor 34 of the electric vehicle 24, which is the load of the power supply system 10, is electrically connected to the output side of the PDU 18. During motoring of the electric vehicle 24, DC power is supplied from the plurality of first batteries 12 to the PDU 18 via the plurality of DC/DC converters 14 or from the second battery 16 to the PDU 18. The PDU 18 converts the DC power into three-phase AC power, and supplies this AC power to the motor 34. Due to this, the motor 34 can be driven and the electric vehicle 24 can be made to travel. On the other hand, during regeneration of the electric vehicle 24, the PDU 18 converts the AC power generated by the motor 34 into DC power. Due to this, the DC power can be input (charged) to the plurality of first batteries 12 via the plurality of DC/DC converters 14 or input (charged) to the second battery 16.

The MG-ECU 22 is an ECU (Electronic Control Unit) for controlling the PDU 18 and the motor 34. The MG-ECU 22 is connected to the PDU 18 and the battery ECU 20 in a manner enabling the communication of signals or information, via communication lines 36 and 38. Furthermore, the MG-ECU 22 and the motor 34 are electrically connected via a communication line 40.

Essentially, the MG-ECU 22 supplies a control signal (signal indicating a torque command value) for operating a switching element forming the PDU 18, via the communication line 36. The PDU 18 transmits the state of the PDU 18 or a protection request for the MG-ECU 22, via the communication line 36. The motor 34 transmits the state of the motor 34 or a protection request for the MG-ECU 22, via the communication line 40.

Manipulation amounts of an acceleration manipulating section, a throttle manipulating section, and the like manipulated by a driver of the electric vehicle 24 and the state of the electric vehicle 24 such as the vehicle velocity or a load request value of auxiliary equipment are input to the MG-ECU 22. The MG-ECU 22 calculates the requested output of the motor 34 based on the state of the electric vehicle 24 input thereto and the information transmitted from the PDU 18 and the motor 34, and transmits the calculated requested output to the battery ECU 20 via the communication line 38. The requested output of the motor 34 includes a request for a power amount (motoring-time requested output) necessary for driving of the motor 34, made by the motor 34 during motoring to each first battery 12 and the second battery 16, and a request for a regeneration power amount (regeneration-time requested output) from the motor 34 made by the motor 34 to each first battery 12 and the second battery 16 when the motor 34 generates power during regeneration. Furthermore, the MG-ECU 22 is capable of transmitting the state of the PDU 18 and the like to the battery ECU 20, via the communication line 38.

The battery ECU 20 is an ECU for controlling the plurality of DC/DC converters 14. The battery ECU 20 performs various processes by reading and executing a program stored in a memory (not shown in the drawings). Specifically, the battery ECU 20 calculates the SOC of each first battery 12 and the second battery 16 from the received states of each of the plurality of first batteries 12 and the second battery 16. Furthermore, the battery ECU 20 calculates a power amount (motoring-time allowed power amount) capable of being output from each first battery 12 and the second battery 16 during motoring and a power amount (regeneration-time allowed power amount) capable of being input to each first battery 12 and the second battery 16 during regeneration. Yet further, the battery ECU 20 calculates a limit current value of each DC/DC converter 14, from the received states of the plurality of DC/DC converters 14.

During motoring, the battery ECU 20 calculates a total value (motoring-time total power amount) of the amount of power that can be output from all of the first batteries 12 and the second battery 16, based on each calculated SOC, each power amount allowed during motoring, each limit current value, the requested output (motoring-time requested output) of the motor 34 received from the MG-ECU 22, and the like. The battery ECU 20 then calculates a power amount (motoring-time power distribution amount) actually output from each first battery 12 and the second battery 16 by distributing the motoring-time total power amount based on the state of each first battery 12 and the second battery 16.

On the other hand, during regeneration, the battery ECU 20 calculate a total value (regeneration-time total power amount) of the amount of power that can be input to all of the first batteries 12 and the second battery 16, based on each regeneration-time allowed power amount, each limit current value, the requested output (regeneration-time requested output) of the motor 34 received from the MG-ECU 22, and the like. The battery ECU 20 then calculates a power amount (regeneration-time power distribution amount) actually input to each first battery 12 and the second battery 16 by distributing the regeneration-time total power amount based on the state of each first battery 12 and the second battery 16.

Then, for each of the plurality of DC/DC converters 14, the battery ECU 20 calculates a motoring-time target current value based on each calculated motoring-time power distribution amount or calculates a regeneration-time target current value based on each calculated regeneration-time power distribution amount. In this way, the battery ECU 20 transmits the target current values to the plurality of DC/DC converters 14 and transmits the battery information such as the SOC of each first battery 12 and the second battery 16 to the MG-ECU 22, via the communication line 30.

The plurality of DC/DC converters 14 raise or lower the battery voltages of the connected first batteries 12 based on the received target current value, thereby adjusting the output voltage that is output to the second-order side (input side of the PDU 18) and adjusting the output current output to the second-order side to be the target current value. On the other hand, the MG-ECU 22 transmits a control signal based on the received information of each first battery 12 and the second battery 16 to the PDU 18, via the communication line 36. The PDU 18 causes a switching element to operate based on the received control signal.

In this way, during motoring, DC power corresponding to the motoring-time power distribution amount is output from each first battery 12 and the second battery 16, and the PDU 18 converts each output DC power into AC power and supplies this AC power to the motor 34. In this way, the motor 34 can be driven and the electric vehicle 24 can be made to travel. On the other hand, during regeneration, the motor 34 generates power and outputs AC power to the PDU 18, and the PDU 18 converts the AC power to DC power. The DC power resulting from the conversion is distributed according to each regeneration-time power distribution amount and input (charged) to each first battery 12 and the second battery 16.

### [2. Concept of the Power Amount Distribution]

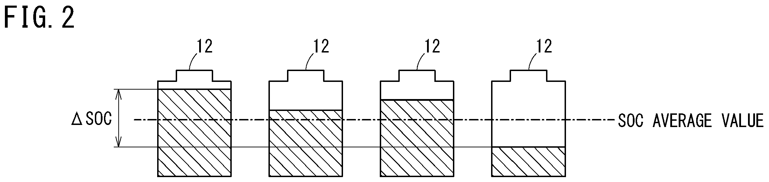

The following describes the concept of the power amount distribution performed by the battery ECU 20, in relation to the power supply system 10 according to the present embodiment configured in the manner described above, while referencing FIGS. 2 to 4. In FIG. 1, the second battery 16 is installed, but the following description concerns the power amount distribution to the plurality of first batteries 12. Accordingly, it should be noted that the second battery 16 is not a strictly essential configurational component in the power supply system 10.

FIG. 2 is a conceptual diagram of the SOCs of the plurality of first batteries 12. When a plurality of first batteries 12 are included in the power supply system 10 (four first batteries 12 in FIGS. 1 and 2), as shown in FIG. 2, there are cases where the individual first batteries 12 have different SOCs from each other. Here, the number of first batteries 12 is N, the average value (threshold value, SOC average value) of the SOCs of the plurality of first batteries 12 is SOCave, the number of first batteries 12 whose SOCs exceed the SOC average value SOCave is n, and the difference between the highest SOC and the lowest SOC among all of the first batteries 12 is ΔSOC. Accordingly, the number of first batteries 12 whose SOCs are less than or equal to the SOC average value SOCave is (N-n).

In the example of FIG. 2, N = 4, n = 3, and N-n = 1. In the following description, the "n first batteries 12 whose SOCs exceed the SOC average value SOCave" may be referred to as the "n first batteries 12" and the "(N-n) first batteries 12 whose SOCs are less than or equal to the SOC average value SOCave" may be referred to as the "(N-n) first batteries 12".

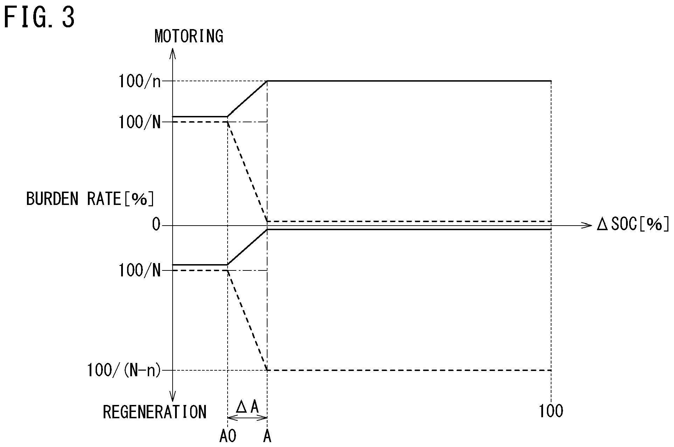

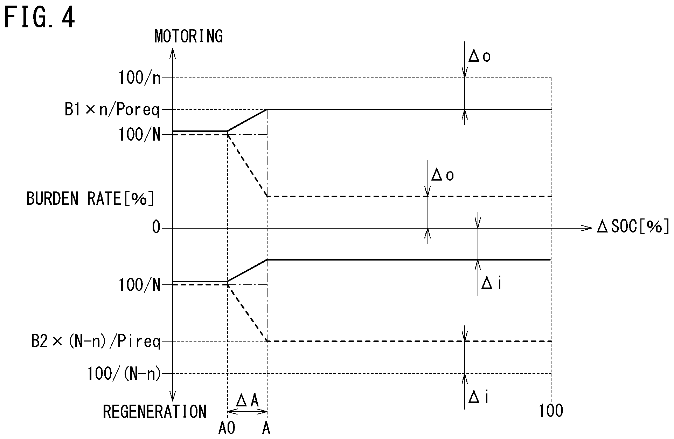

With the battery ECU 20, during motoring and during regeneration, the motoring-time power distribution amount and the regeneration-time power distribution amount for each first battery 12 are determined in accordance with the concepts shown in FIGS. 3 and 4. FIGS. 3 and 4 show the relationship between the burden rates and ΔSOC, with the horizontal axis indicating ΔSOC and the vertical axis indicating the burden rate of each first battery 12 during motoring and during regeneration.

Here, the burden rate indicates the ratio with which each first battery 12 bears the input/output of the power amount, with respect to the requested output (motoring-time requested output, regeneration-time requested output). With the battery ECU 20, during motoring, the motoring-time total power amount for the motoring-time requested output is calculated, and the motoring-time burden rate indicates what ratio of the power amount is to be output (borne) by each first battery 12 for the motoring-time requested output (motoring-time total power amount). On the other hand, with the battery ECU 20, during regeneration, the regeneration-time total power amount for the regeneration-time requested output is calculated, and the regeneration-time burden rate indicates what ratio of the power amount is to be input (borne) by each first battery 12 for the regeneration-time requested output (regeneration-time total power amount).

Furthermore, during motoring, power is output in a direction from the plurality of first batteries 12 to the motor 34, but during regeneration, power is input (regenerated) in a direction from the motor 34 to the plurality of first batteries 12, i.e. a direction that is opposite to the direction during motoring. Therefore, in FIGS. 3 and 4, the burden rate during motoring is shown in the positive direction of the vertical axis and the burden rate during regeneration is shown in the negative direction of the vertical axis. In the following description, the burden rates during motoring and during regeneration are described as absolute values. Accordingly, it should be noted that the greater the distance in the positive direction or negative direction from 0 [%] on the vertical axis, the larger the burden rate of each first battery 12 during motoring and during regeneration.

The concept shown in FIGS. 3 and 4 is that, with the SOC average value SOCave serving as a threshold value, after dividing all of the first batteries 12 into a group of n first batteries 12 whose SOCs exceed the threshold value (SOC average value SOCave) and a group of (N-n) first batteries 12 whose SOCs are less than or equal to the threshold value, the burden rates of the first batteries 12 associated with the respective groups are changed between a case where ΔSOC is less than a prescribed value A (ΔSOC < A) and a case where ΔSOC is greater than or equal to the prescribed value A (ΔSOC ≥ A). Furthermore, it should be noted that in FIGS. 3 and 4, the burden rates of the first batteries 12 in the group of n first batteries 12 are the same value as each other, and the burden rates of the first batteries 12 in the group of (N-n) first batteries 12 are the same value as each other.

The example of FIG. 3 shows the distribution of the power amount in a case where it is possible, during motoring, to output a power amount corresponding to the motoring-time requested output from only the n first batteries 12 whose SOCs exceed SOCave and, during regeneration, to input a power amount corresponding to the regeneration-time requested output to only the (N-n) first batteries 12 whose SOCs are less than or equal to the SOC average value SOCave. In FIG. 3, the solid lines indicate the change of the burden rate for the n first batteries 12 and the dashed lines indicate the change of the burden rate for the (N-n) first batteries 12.

During motoring in FIG. 3, if ΔSOC is less than the prescribed value A (ΔSOC < A), the variation in the SOC among all of the first batteries 12 is relatively small. In this case, the battery ECU 20 sets the burden rate of each first battery 12 for the motoring-time requested output (motoring-time total power amount) to be 100/N [%]. Due to this, all of the first batteries 12 equally bear the motoring-time requested output, and output the same power amount.

Furthermore, during motoring in FIG. 3, if ΔSOC is greater than or equal to A (ΔSOC ≥ A), the variation in the SOC between the n first batteries 12 and the (N-n) first batteries 12 is relatively large, and it is difficult to output power from the (N-n) first batteries 12, which have a low SOC. In this case, the battery ECU 20 sets the burden rate of each first battery 12 for the motoring-time requested output (motoring-time total power amount) to be 100/n [%] for the n first batteries 12, as shown by the solid line, and to be 0[%] for the (N-n) first batteries 12, as shown by the dashed line. In this way, a power amount corresponding to a burden rate of 100/n [%] is output with priority only from the n first batteries 12.

On the other hand, during regeneration in FIG. 3, if ΔSOC is less than the prescribed value A (ΔSOC < A), the battery ECU 20 sets the burden rate of each first battery 12 for the regeneration-time requested output (regeneration-time total power amount) to be 100/N [%]. Due to this, all of the first batteries 12 equally bear the regeneration-time requested output, and receive (are charged with) the same power amount.

Furthermore, during regeneration in FIG. 3, if ΔSOC is greater than or equal to the prescribed value A (ΔSOC ≥ A), it is preferable to prioritize charging of the (N-n) first batteries 12 to recover the SOC. In this case, the battery ECU 20 sets the burden rate of each first battery 12 for the regeneration-time requested output (regeneration-time total power amount) to be 0 [%] for the n first batteries 12, as shown by the solid line, and to be 100/(N-n) [%] for the (N-n) first batteries 12, as shown by the dashed line. In this way, a power amount corresponding to a burden rate of 100/(N-n) [%] is input (charged) with priority to only the (N-n) first batteries 12.

In this way, in FIG. 3, the battery ECU 20 changes the burden rates using the prescribed value A [%] as a boundary. However, in actuality, in consideration of the controllability of the plurality of DC/DC converters 14 for the plurality of first batteries 12, the battery ECU 20 may gradually change the burden rates for the n first batteries 12 and the (N-n) first batteries 12 within a range of ΔA [%] that is from A0 [%] to A [%]. In FIG. 3, a case where the burden rates are changed at the prescribed value A [%] is shown by a single-dot chain line.

On the other hand, the example of FIG. 4 shows the distribution of the power amount in a case where, during motoring, it is necessary to output power from the (N-n) first batteries 12 as well due to the n first batteries 12 alone being unable to output (cover) the power amount corresponding to the motoring-time requested output and where, during regeneration, an excess portion (residual portion) of the power amount occurs when power has been input to only the (N-n) first batteries 12, due to the regeneration-time requested output being large.

During motoring in FIG. 4 as well, if ΔSOC is less than the prescribed value A (ΔSOC < A), the battery ECU 20 sets the burden rate of each first battery 12 for the motoring-time requested output to be 100/N [%].

On the other hand, during motoring in FIG. 4, if ΔSOC is greater than or equal to the prescribed value A (ΔSOC ≥ A), the motoring-time requested load cannot be covered just by the power amount output from the n first batteries 12, due to the motoring-time requested output being large.

Therefore, the battery ECU 20 sets the burden rate for the motoring-time requested output to be B1×n/Poreq [%] for the n first batteries 12, as shown by the solid line, and to be Δo [%] for the (N-n) first batteries 12, as shown by the dashed line. Here, B1 indicates the power amount (motoring-time allowed power amount) capable of being output during motoring by each of the n first batteries 12. Furthermore, Poreq is the motoring-time requested output. Yet further, Δo is the burden rate of the (N-n) first batteries 12, and Δo = (100/n-B1×n/Poreq) [%].

In this way, the insufficient portion of the power amount is output from the (N-n) first batteries 12 in addition to the power amount output from the n first batteries 12, and so it is possible to efficiently output power even when the motoring-time requested output is large.

During regeneration in FIG. 4 as well, if ΔSOC is less than the prescribed value A (ΔSOC < A), the battery ECU 20 sets the burden rate of each first battery 12 for the regeneration-time requested output to be 100/N [%].

On the other hand, during regeneration in FIG. 4, if ΔSOC is greater than or equal to the prescribed value A (ΔSOC ≥ A), the excess power amount occurs when power is input only to the (N-n) first batteries 12, due to the regeneration-time requested output being large.

Therefore, the battery ECU 20 sets the burden rate of each first battery 12 for the regeneration-time requested output to be Δi [%] for the n first batteries 12, as shown by the solid line, and to be B2×(N-n)/Pireq [%] for the (N-n) first batteries 12, as shown by the dashed line. Here, B2 indicates the power amount (regeneration-time allowed power amount) capable of being input during regeneration to each of the (N-n) first batteries 12. Furthermore, Pireq is the regeneration-time requested output. Yet further, Δi is the burden rate of the n first batteries 12, and Δi = (100/(N-n)-B2×(N-n)/Pireq) [%].

In this way, power is input to the (N-n) first batteries 12 and the residual power is input to the n first batteries 12, and therefore power can be efficiently input even when the regeneration-time output is large.

### [3. Operation of the Present Embodiment]

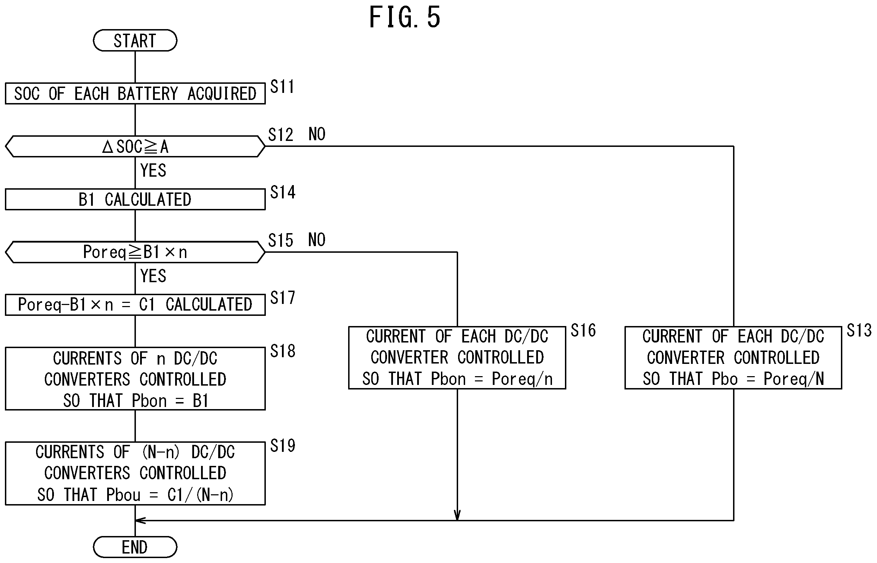

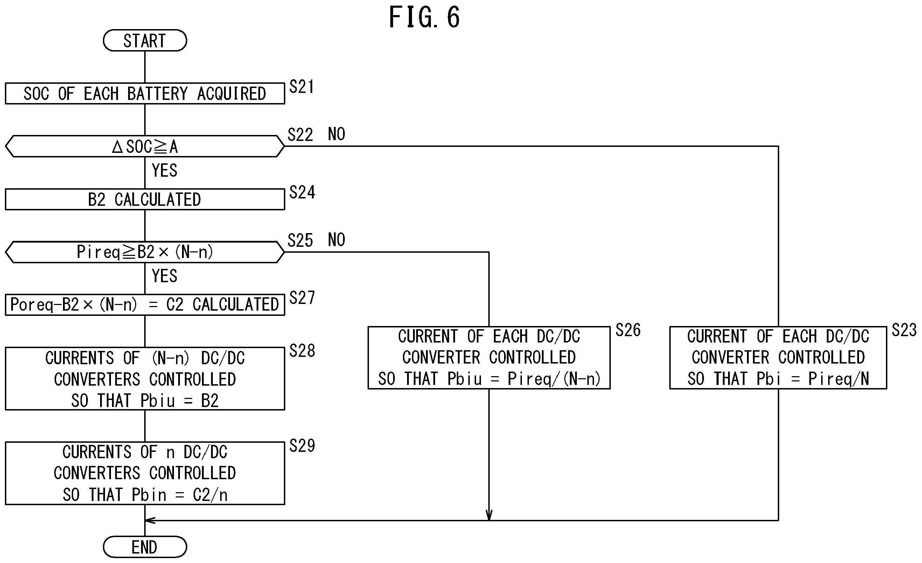

The following describes the operation of the power supply system 10 according to the present embodiment, while referencing the flow charts of FIGS. 5 and 6. In the description of the operation, FIGS. 1 to 4 will also be referenced as needed. Here, the operation of the power supply system 10 for realizing the concepts of FIGS. 3 and 4 is described while referencing the flow charts of FIGS. 5 and 6.

### <3.1. Operation During Motoring>

First, the operation during motoring of FIGS. 3 and 4 is described while referencing the flow chart of FIG. 5.

At step S11 of FIG. 5, the battery ECU 20 acquires the state (battery voltage, battery current, and temperature) of each first battery 12 from the BMUs 26 attached to the plurality of first batteries 12. The battery ECU 20 calculates the SOC of each first battery 12 based on the acquired state of each first battery 12. Furthermore, the battery ECU 20 calculates the SOC average value SOCave of each of the first batteries 12, and also calculates the difference ΔSOC between the highest SOC and the lowest SOC for each of the first batteries 12.

At step S12, the battery ECU 20 judges whether ΔSOC is greater than or equal to the prescribed value A [%].

If ΔSOC is less than the prescribed value A (ΔSOC < A, step S12: NO), the process moves to step S13. At step S13, the battery ECU 20 calculates the power amount to be output by each of the plurality of first batteries 12 during motoring, i.e. the motoring-time power distribution amount Pbo (Pbo = Poreq/N), using the motoring-time requested output Poreq and the number N of the plurality of first batteries 12. The battery ECU 20 then calculates the target current value during motoring based on each calculated motoring-time power distribution amount Pbo. The battery ECU 20 transmits the target current value to the plurality of DC/DC converters 14, via the communication line 30.

Due to this, the plurality of DC/DC converters 14 can output a power amount corresponding to the motoring-time power distribution amount Pbo from the first batteries 12, by performing a voltage raising/lowering operation on the battery voltage based on the received target current value. As a result, the sum total of the power amount output to the PDU 18 from the plurality of first batteries 12 can be adjusted to be the motoring-time requested output Poreq (motoring-time total power amount).

On the other hand, at step S12, if ΔSOC is greater than or equal to the prescribed value A (ΔSOC ≥ A, step S12: YES), the process moves to step S14. At step S14, the battery ECU 20 calculates the power amount B1 (motoring-time allowed power amount) capable of being output during motoring, for each of the n first batteries 12.

At the following step S15, the battery ECU 20 judges whether the motoring-time requested output Poreq is greater than or equal to the total value B1×n of the power capable of being output from the n first batteries 12.

At step S15, if the motoring-time requested output Poreq is less than the total value B1×n (Poreq < B1×n, step S15: NO), the process moves to step S16. At step S16, the battery ECU 20 judges that the motoring-time requested output Poreq can be covered by just the power amount output from the n first batteries 12, and calculates a motoring-time power distribution amount Pbon (Pbon = Poreq/n) by dividing the motoring-time requested output Poreq by n.

The battery ECU 20 then calculates the target current value during motoring, based on each calculated motoring-time power distribution amount Pbon. The battery ECU 20 transmits the target current value to the plurality of DC/DC converters 14, via the communication line 30. Due to this, the plurality of DC/DC converters 14 can output a power amount corresponding to the motoring-time power distribution amount Pbon from the first batteries 12, by performing the voltage raising/lowering operation on the battery voltage based on the received target current value. In this case as well, the total sum of the power amount output to the PDU 18 from the plurality of first batteries 12 can be adjusted to the motoring-time requested output Poreq (motoring-time total power amount).

As shown in FIG. 3, if ΔSOC ≥ A during motoring, the burden rate of the (N-n) first batteries 12 is 0 [%]. Therefore, at step S16, it should be noted that the motoring-time power distribution amount for the (N-n) first batteries 12 is 0, and that the target current value is also 0.

On the other hand, at step S15, if the motoring-time requested output Poreq is greater than or equal to the total value B1×n (Poreq ≥ B1×n, step S15: YES), the process moves to step S17. At step S17, the battery ECU 20 judges that the motoring-time requested output Poreq cannot be covered just by the power amount from the n first batteries 12. Therefore, the battery ECU 20 calculates a difference C1 (C1 = Poreq-B1×n) between the motoring-time requested output Poreq and the power amount B1×n capable of being output from the n first batteries 12. In other words, the battery ECU 20 calculates C1 that is the amount of power that is an insufficient portion of the power amount to be output from the (N-n) first batteries 12.

At step S18, the battery ECU 20 calculates the target current value at the time when the motoring-time power distribution amount Pbon is the power amount B1, for the DC/DC converters 14 connected to the n first batteries 12. The battery ECU 20 transmits this target current value to the DC/DC converters 14 connected to the n first batteries 12, via the communication line 30. Due to this, the DC/DC converters 14 that receive the target current value can output the power amount B1 from the n first batteries 12, by performing the voltage raising/lowering operation on the battery voltage based on this target current value.

Furthermore, at step S19, the battery ECU 20 sets a motoring-time power distribution amount Pbou for the DC/DC converters 14 connected to the (N-n) first batteries 12 to be C1/(N-n) (Pbou = C1/(N-n)), and calculates a target current value corresponding to this motoring-time power distribution amount Pbou. The battery ECU 20 transmits this target current value to the DC/DC converters 14 connected to the (N-n) first batteries 12, via the communication line 30. Due to this, the DC/DC converters 14 that receive the target current value can output the power amount C1/(N-n), which is the insufficient portion, from the (N-n) first batteries 12, by performing the voltage raising/lowering operation on the battery voltage based on this target current value.

Accordingly, due to the processes of steps S18 and S19, even when the motoring-time requested output Poreq is large, the total sum of the power amount output to the PDU 18 from the plurality of first batteries 12 can be adjusted to be this motoring-time requested output Poreq.

### <3.2. Operation During Regeneration>

The following describes the operation during regeneration of FIGS. 3 and 4, while referencing the flow chart of FIG. 6.

At step S21 of FIG. 6, the battery ECU 20 acquires the state of the first batteries 12 from the BMUs 26 and calculates the SOC of each first battery 12 based on the acquired state of each first battery 12, in the same manner as in step S11 of FIG. 5. In this case as well, the battery ECU 20 calculates the SOC average value SOCave and the difference ΔSOC.

At step S22, the battery ECU 20 judges whether ΔSOC is greater than or equal to the prescribed value A [%], in the same manner as in step S12.

If ΔSOC is less than the prescribed value A (ΔSOC < A, step S22: NO), the process moves to step S23. At step S23, the battery ECU 20 calculates the power amount (regeneration-time allowed power amount) capable of being input to each of the plurality of first batteries 12 during regeneration, i.e. the regeneration-time power distribution amount Pbi (Pbi = Pireq/N), by dividing the regeneration-time requested output Pireq by the number N. The battery ECU 20 then calculates the target current value during regeneration based on each calculated regeneration-time power distribution amount Pbi. The battery ECU 20 transmits the target current value to the plurality of DC/DC converters 14, via the communication line 30.

Due to this, the plurality of DC/DC converters 14 can input a power amount corresponding to the regeneration-time power distribution amount Pbi to the first batteries 12, by performing the voltage raising/lowering operation on the battery voltage based on the received target current value. In this case, the sum total of the power amount input to the plurality of first batteries 12 is adjusted to be the regeneration-time requested output Pireq (regeneration-time total power amount).

On the other hand, at step S22, if ΔSOC is greater than or equal to the prescribed value A (ΔSOC ≥ A, step S22: YES), the process moves to step S24. At step S24, the battery ECU 20 calculates the power amount B2 (regeneration-time allowed power amount) capable of being input during regeneration, for each of the (N-n) first batteries 12.

At the following step S25, the battery ECU 20 judges whether the regeneration-time requested output Pireq is greater than or equal to the total value B2×(N-n) of the power capable of being input to the (N-n) first batteries 12.

At step S25, if the regeneration-time requested output Pireq is less than the total value B2×(N-n) (Pireq < B2×(N-n), step S25: NO), the process moves to step S26. At step S26, the battery ECU 20 judges that all of the regeneration-time requested output Pireq can be input to the (N-n) first batteries 12, and calculates a regeneration-time power distribution amount Pbiu by dividing the regeneration-time requested output Pireq by (N-n) (Pbiu = Pireq/(N-n)).

The battery ECU 20 then calculates the target current value during regeneration, based on each calculated regeneration-time power distribution amount Pbiu. The battery ECU 20 transmits the target current value to the plurality of DC/DC converters 14, via the communication line 30. Due to this, the plurality of DC/DC converters 14 can input a power amount corresponding to the regeneration-time power distribution amount Pbiu with priority to the (N-n) first batteries 12, by performing the voltage raising/lowering operation on the battery voltage based on the received target current value. In this case as well, the total sum of the power amount input to the plurality of first batteries 12 can be adjusted to the regeneration-time requested output Pireq (regeneration-time total power amount).

As shown in FIG. 3, if ΔSOC ≥ A during regeneration, the burden rate of the n first batteries 12 is 0 [%]. Therefore, at step S26, it should be noted that the regeneration-time power distribution amount for the n first batteries 12 is 0, and that the target current value is also 0.

On the other hand, at step S25, if the regeneration-time requested output Pireq is greater than or equal to the total value B2×(N-n) (Pireq ≥ B2×(N-n), step S25: YES), the process moves to step S27. At step S27, the battery ECU 20 judges that an excess portion of the power amount would be generated by only inputting power to the (N-n) first batteries 12. Therefore, the battery ECU 20 calculates a difference C2 (C2 = Pireq-B2×(N-n)) between the regeneration-time requested output Pireq and the power amount B2×(N-n) capable of being input to the (N-n) first batteries 12. In other words, the battery ECU 20 calculates C2 that is the amount of power to be input to the n first batteries 12.

At step S28, the battery ECU 20 calculates the target current value at the time when the regeneration-time power distribution amount Pbiu is the power amount B2, for the DC/DC converters 14 connected to the (N-n) first batteries 12. The battery ECU 20 transmits this target current value to the DC/DC converters 14 connected to the (N-n) first batteries 12, via the communication line 30. Due to this, the DC/DC converters 14 that receive the target current value can input the power amount B2 with priority to the (N-n) first batteries 12, by performing the voltage raising/lowering operation on the battery voltage based on this target current value.

Furthermore, at step S29, the battery ECU 20 sets a regeneration-time power distribution amount Pbin for the DC/DC converters 14 connected to the n first batteries 12 to be C2/n (Pbin = C2/n), and calculates a target current value corresponding to this regeneration-time power distribution amount Pbin. The battery ECU 20 transmits this target current value to the DC/DC converters 14 connected to the n first batteries 12, via the communication line 30. Due to this, the DC/DC converters 14 that receive the target current value can input the power amount C2/n to the n first batteries 12, by performing the voltage raising/lowering operation on the battery voltage based on this target current value.

Accordingly, due to the processes of steps S28 and S29, even when the regeneration-time requested output Pireq is large, the total sum of the power amount input to the plurality of first batteries 12 can be adjusted to be this regeneration-time requested output Pireq.

### [4. Modifications of the Operations of the Present Embodiment]

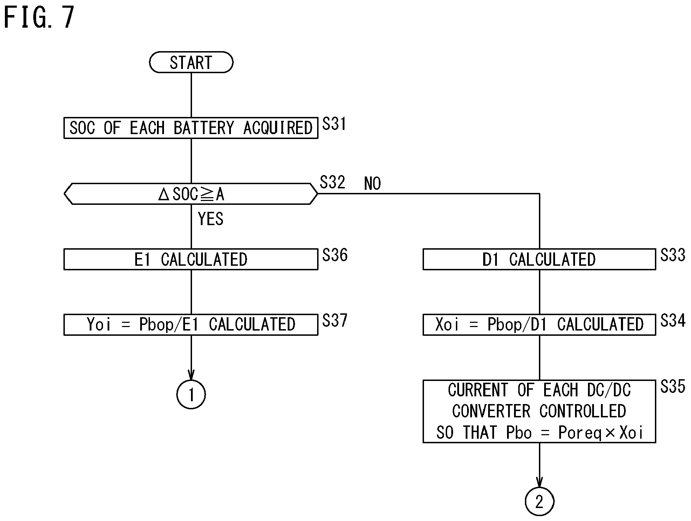

The following describes modifications of the operations of FIGS. 5 and 6, while referencing FIGS. 7 to 10. In FIGS. 5 and 6, in order to reflect the concepts of FIGS. 3 and 4, an example is described of a case in which input/output of the same power amounts is performed for the n first batteries 12 whose SOCs exceed the SOC average value SOCave, and input/output of the same power amounts is performed for the (N-n) first batteries 12 whose SOCs are less than or equal to the SOC average value SOCave. In other words, a case is described in which the n first batteries 12 have the same burden rates as each other and the (N-n) first batteries 12 have the same burden rates as each other.

FIGS. 7 to 10 differ from FIGS. 5 and 6 in that the burden rates (output burden rates) of the individual first batteries 12 are different from each other. It should be noted that, in the modification of FIGS. 7 to 10, there can be cases where the target current values transmitted from the battery ECU 20 to the plurality of DC/DC converters 14 differ for each DC/DC converter 14, according to the burden rate.

### <4.1. Operation During Motoring>

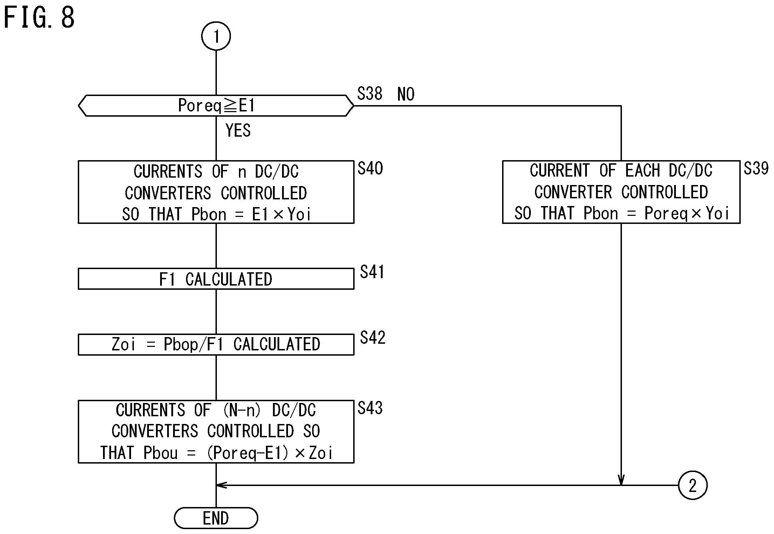

The following describes the operation during motoring, while referencing the flow charts of FIGS. 7 and 8.

At step S31 of FIG. 7, the battery ECU 20 acquires the state of the first batteries 12 from the plurality of BMUs 26, and calculates the SOCs of the first batteries 12 based on the acquired states of the first batteries 12, in the same manner as in step S11 of FIG. 5. Furthermore, the battery ECU 20 calculates the SOC average value SOCave and the difference ΔSOC.

At step S32, the battery ECU 20 judges whether ΔSOC is greater than or equal to the prescribed value A [%].

If ΔSOC is less than the prescribed value A (ΔSOC < A, step S32: NO), the process moves to step S33. At step S33, the battery ECU 20 calculates a motoring-time total power amount D1, which is the total value of the power amount capable of being output from the plurality of first batteries 12 during motoring.

At the following step S34, the battery ECU 20 calculates a burden rate (output burden rate) Xoi that is a ratio of a power amount Pbop capable of being output from each of the plurality of first batteries 12 to the motoring-time total power amount D1 (Xoi = Pbop/D1). The "i" appended to the output burden rate Xoi is a number assigned to each of the plurality of first batteries 12 (i = 1, 2, ..., N) .

At the following step S35, the battery ECU 20 calculates the motoring-time power distribution amount Pbo of each first battery 12 (Pbo = Poreq×Xoi), by multiplying the motoring-time requested output Poreq by the output burden rate Xoi of each first battery 12. The battery ECU 20 then calculates the target current value during motoring based on each calculated motoring-time power distribution amount Pbo. The battery ECU 20 transmits the target current value to the plurality of DC/DC converters 14, via the communication line 30. Due to this, the plurality of DC/DC converters 14 can output a power amount corresponding to the motoring-time power distribution amount Pbo from the first batteries 12, by performing the voltage raising/lowering operation on the battery voltage based on the received target current value.

On the other hand, at step S32, if ΔSOC is greater than or equal to the prescribed value A (ΔSOC ≥ A, step S32: YES), the process moves to step S36. At step S36, the battery ECU 20 calculates a power amount E1 that is the total value of the power amount capable of being output from the n first batteries 12.

At the following step S37, the battery ECU 20 calculates, for the n first batteries 12, a burden rate (output burden rate) Yoi that is a ratio of the power amount Pbop capable of being output from the n first batteries 12 to the power amount E1 (Yoi = Pbop/E1). The "i" appended to the output burden rate Yoi is a number assigned to each of the plurality of n first batteries 12 (i = 1, 2, ..., n) .

At step S38, the battery ECU 20 judges whether the motoring-time requested output Poreq is greater than or equal to the power amount E1.

At step S38 of FIG. 8, if the motoring-time requested output Poreq is less than the power amount E1 (Poreq < E1, step S38: NO), the process moves to step S39. At step S39, the battery ECU 20 judges that the motoring-time requested output Poreq can be covered by just the power amount output from the n first batteries 12, and calculates a motoring-time power distribution amount Pbon (Pbon = Poreq×Yoi) by multiplying the motoring-time requested output Poreq by the output burden rate Yoi.

The battery ECU 20 then calculates the target current value during motoring, based on each calculated motoring-time power distribution amount Pbon. The battery ECU 20 transmits the target current value to the plurality of DC/DC converters 14, via the communication line 30. Due to this, the plurality of DC/DC converters 14 can output a power amount corresponding to the motoring-time power distribution amount Pbon from the first batteries 12, by performing the voltage raising/lowering operation on the battery voltage based on the received target current value.

On the other hand, at step S38, if the motoring-time requested output Poreq is greater than or equal to the power amount E1 (Poreq ≥ E1, step S38: YES), the process moves to step S40. At step S40, the battery ECU 20 judges that the motoring-time requested output Poreq cannot be covered just by the power amount from the n first batteries 12. Therefore, the battery ECU 20 calculates the motoring-time power distribution amount Pbon of the n first batteries 12 by multiplying together the power amount E1 by the output burden rate Yoi (Pbon = E1×Yoi).

The battery ECU 20 then calculates the target current value corresponding to the motoring-time power distribution amount Pbon, for the DC/DC converters 14 connected to the n first batteries 12. The battery ECU 20 transmits this target current value to the DC/DC converters 14 connected to the n first batteries 12, via the communication line 30. Due to this, the DC/DC converters 14 that receive the target current value can output the motoring-time power distribution amount Pbon from the n first batteries 12, by performing the voltage raising/lowering operation on the battery voltage based on this target current value.

Furthermore, at step S41, the battery ECU 20 calculates F1, which is the total value of the power amount capable of being output from the (N-n) first batteries 12.

At the following step S42, the battery ECU 20 calculates an output burden rate Zoi for the (N-n) first batteries 12, by dividing the power amount Pbop capable of being output from each of the (N-n) first batteries 12 by the power amount F1 (Zoi = Pbop/F1). The appended "i" is a number assigned to each of the plurality of (N-n) first batteries 12 (i = 1, 2, ..., (N-n)).

At the following step S43, the battery ECU 20 calculates the motoring-time power distribution amount Pbou of the (N-n) first batteries 12, by multiplying the output burden rate Zoi by the difference between the motoring-time requested output Poreq and the power amount E1 (Pbou = (Poreq-E1)×Zoi). The battery ECU 20 then calculates a target current value corresponding to the motoring-time power distribution amount Pbou for the DC/DC converters 14 connected to the (N-n) first batteries 12. The battery ECU 20 transmits this target current value to the DC/DC converters 14 connected to the (N-n) first batteries 12, via the communication line 30. Due to this, the DC/DC converters 14 that receive the target current value can output the motoring-time power distribution amount Pbou from the (N-n) first batteries 12, by performing the voltage raising/lowering operation on the battery voltage based on this target current value.

### <4.2. Operation During Regeneration>

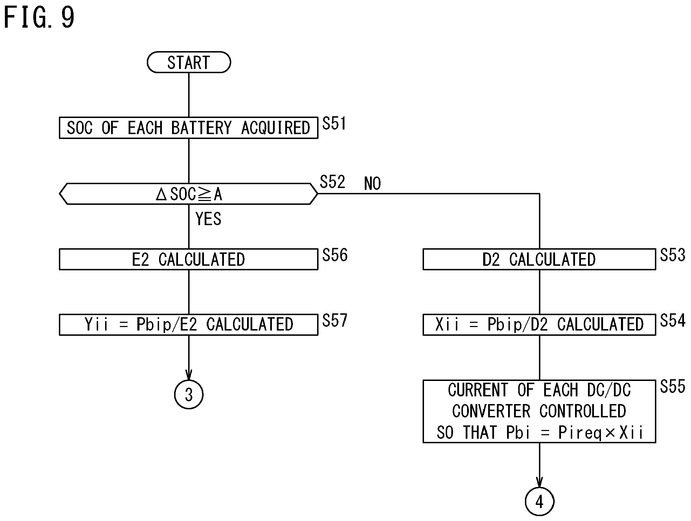

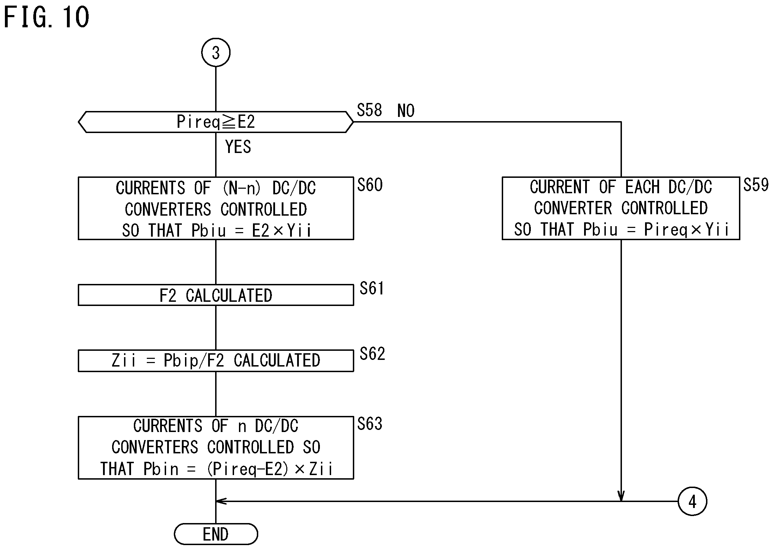

The following describes the operation during regeneration, while referencing the flow charts of FIGS. 9 and 10.

At step S51 of FIG. 9, the battery ECU 20 acquires the states of the first batteries 12 from the BMUs 26 and calculates the SOCs of the first batteries 12 based on the acquired states of the first batteries 12, in the same manner as in step S21 of FIG. 6. Furthermore, the battery ECU 20 calculates the SOC average value SOCave and the difference ΔSOC.

At step S52, the battery ECU 20 judges whether ΔSOC is greater than or equal to the prescribed value A [%].

If ΔSOC is less than the prescribed value A (ΔSOC < A, step S52: NO), the process moves to step S53. At step S53, the battery ECU 20 calculates a regeneration-time total power amount D2, which is the total value of the power amount capable of being input to the plurality of first batteries 12 during regeneration.

At the following step S54, the battery ECU 20 calculates an output burden rate Xii of each first battery 12, by dividing the power amount Pbip capable of being input to the individual first batteries 12 by the regeneration-time total power amount D2 (Xii = Pbip/D2). The "i" appended to the end of the output burden rate Xii is a number assigned to each of the plurality of first batteries 12 (i = 1, 2, ..., N).

At the following step S55 the battery ECU 20 calculates the regeneration-time power distribution amount Pbi of each first battery 12, by multiplying the regeneration-time requested output Pireq by the output burden rate Xii (Pbi = Pireq×Xii). The battery ECU 20 then calculates the target current value during regeneration based on each calculated regeneration-time power distribution amount Pbi. The battery ECU 20 transmits the target current value to the plurality of DC/DC converters 14, via the communication line 30. Due to this, the plurality of DC/DC converters 14 can input a power amount corresponding to the regeneration-time power distribution amount Pbi to the first batteries 12, by performing the voltage raising/lowering operation on the battery voltage based on the received target current value.

On the other hand, at step S52, if ΔSOC is greater than or equal to the prescribed value A (ΔSOC ≥ A, step S52: YES), the process moves to step S56. At step S56, the battery ECU 20 calculates the power amount E2, which is the total value of the power amount capable of being input to the (N-n) first batteries 12.

At the following step S57, the battery ECU 20 calculates an output burden rate Yii of the (N-n) first batteries 12, by dividing the power amount Pbip capable of being input to the (N-n) first batteries 12 by the power amount E2 (Yii = Pbip/E2). The "i" appended to the output burden rate Yii is a number assigned to each of the (N-n) first batteries 12 (i = 1, 2, ..., (N-n)).

At step S58 of FIG. 10, the battery ECU 20 judges whether the regeneration-time requested output Pireq is greater than or equal to the power amount E2.

At step S58, if the regeneration-time requested output Pireq is less than the power amount E2 (Pireq < E2, step S58: NO), the process moves to step S59. At step S59, the battery ECU 20 judges that the power amount of the regeneration-time requested output Pireq is capable of being input to just the (N-n) first batteries 12, and calculates the regeneration-time power distribution amount Pbiu by multiplying the regeneration-time requested output Pireq by the output burden rate Yii (Pbiu = Pireq×Yii).

The battery ECU 20 then calculates the target current value during regeneration, based on each calculated regeneration-time power distribution amount Pbiu. The battery ECU 20 transmits the target current value to the plurality of DC/DC converters 14, via the communication line 30. Due to this, the plurality of DC/DC converters 14 can input a power amount corresponding to the regeneration-time power distribution amount Pbiu with priority to the (N-n) first batteries 12, by performing the voltage raising/lowering operation on the battery voltage based on the received target current value.

On the other hand, at step S58, if the regeneration-time requested output Pireq is greater than or equal to the power amount E2 (Pireq ≥ E2, step S58: YES), the process moves to step S60. At step S60, the battery ECU 20 judges that an excess portion of the power amount would be generated by only inputting the regeneration-time requested output Pireq to the (N-n) first batteries 12. Therefore, the battery ECU 20 calculates the regeneration-time power distribution amount Pbiu of the (N-n) first batteries 12 by multiplying the power amount E2 by the output burden rate Yii (Pbiu = E2×Yii).

The battery ECU 20 then calculates the target current value corresponding to the regeneration-time power distribution amount Pbiu, for the DC/DC converters 14 connected to the (N-n) first batteries 12. The battery ECU 20 transmits this target current value to the DC/DC converters 14 connected to the (N-n) first batteries 12, via the communication line 30. Due to this, the DC/DC converters 14 that receive the target current value can input the regeneration-time power distribution amount Pbiu with priority to the (N-n) first batteries 12, by performing the voltage raising/lowering operation on the battery voltage based on this target current value.

Furthermore, at step S61, the battery ECU 20 calculates F2, which is the total value of the power amount capable of being input to the n first batteries 12.

At the following step S62, the battery ECU 20 calculates an output burden rate Zii of the n first batteries 12, by dividing the power amount Pbip capable of being input to each of the n first batteries 12 by the power amount F2 (Zii = Pbip/F2). The "i" appended to the end is a number assigned to the n first batteries 12 (i = 1, 2, ..., n) .

At the following step S63, the battery ECU 20 calculates the regeneration-time power distribution amount Pbin of the n first batteries 12, by multiplying the output burden rate Zii by the difference between the regeneration-time requested output Pireq and the power amount E2 (Pbin = (Pireq-E2)×Zii). The battery ECU 20 then calculates a target current value corresponding to the regeneration-time power distribution amount Pbin for the DC/DC converters 14 connected to the n first batteries 12. The battery ECU 20 transmits this target current value to the DC/DC converters 14 connected to the n first batteries 12, via the communication line 30. Due to this, the DC/DC converters 14 that receive the target current value can input the regeneration-time power distribution amount Pbin to the n first batteries 12, by performing the voltage raising/lowering operation on the battery voltage based on this target current value.

### [5. Effect of the Present Embodiment]

As described above, according the power supply system 10 of the present embodiment, the power supply system 10 includes the plurality of first batteries 12, the plurality of DC/DC converters 14 (input/output adjustment apparatuses) that are electrically connected between the plurality of first batteries 12 and the motor 34 (load), and the battery ECU 20 (control apparatus) that controls the input/output of power to/from the plurality of first batteries 12 by controlling the plurality of DC/DC converters 14.

During motoring in which power is output from the plurality of first batteries 12 to the motor 34 via the plurality of DC/DC converters 14, the battery ECU 20 controls the plurality of DC/DC converters 14 to output the power with priority from the first batteries 12 whose SOCs exceed a threshold value (SOC average value SOCave) among the plurality of first batteries 12. Furthermore, during regeneration in which power is input from the motor 34 to the plurality of first batteries 12 via the plurality of DC/DC converters 14, the battery ECU 20 controls the plurality of DC/DC converters 14 to input power with priority to the first batteries 12 whose SOCs are less than or equal to the threshold value among the plurality of first batteries 12.

In this way, during motoring, output from the first batteries 12 with low SOCs is restricted, and during regeneration, power is input with priority to the first batteries 12 with low SOCs to recover the SOCs. In this way, it is possible to suppress the variation in the SOC among the plurality of first batteries 12, and to improve the output of the power supply system 10 that includes the plurality of first batteries 12.

Furthermore, even when there is variation in the SOC among the plurality of first batteries 12, the SOCs are recovered without transferring power around, and therefore it is possible to suppress a drop in the power efficiency.

In this way, with the present embodiment, it is possible to suitably control the SOC among the plurality of first batteries 12.

In this case, the threshold value is the SOC average value SOCave of the plurality of the first batteries 12 and, during motoring, the battery ECU 20 may control the plurality of DC/DC converters 14 to output the power with priority from the first batteries 12 (n first batteries 12) whose SOCs exceed the SOC average value SOCave. In this way, it is possible to uniformly utilize the SOC of each first battery 12. In other words, since power is output with priority from the n first batteries 12 having high SOCs, it is possible to output power while restricting variation in the SOC among the first batteries 12 with relatively simple control.

Furthermore, during motoring, when the power amount capable of being output from the first batteries 12 whose SOCs exceed the SOC average value SOCave is larger than the requested output of the motor 34 (motoring-time requested output Poreq), the battery ECU 20 controls the plurality of DC/DC converters 14 to output power from these first batteries 12 to the motor 34 via the DC/DC converters 14. In this way, it is possible to more efficiently utilize the SOC of each first battery 12.

Furthermore, during motoring, when the requested output of the motor 34 is greater than or equal to the power amount capable of being output from the first batteries 12 whose SOCs exceed the SOC average value SOCave, the battery ECU 20 controls the plurality of DC/DC converters 14 to output just this power amount from these first batteries 12 to the motor 34 via the DC/DC converters 14, and to output a power amount equal to the insufficient amount relative to the requested output to the motor 34 from the first batteries 12 ((N-n) first batteries 12) whose SOCs are less than or equal to the SOC average value SOCave, via the DC/DC converters 14 connected to these first batteries 12. In this way, even when the requested output is large, it is possible to efficiently utilize the SOC of each first battery 12.

Yet further, in a case where there are a plurality of the first batteries 12 whose SOCs exceed the SOC average value SOCave, the battery ECU 20 controls the plurality of DC/DC converters 14 to output the same power amount from the plurality of first batteries 12 or to output power amounts corresponding to the output burden rates of the plurality of first batteries 12 for the requested output. In this way, it is possible to more efficiently utilize the SOC of each first battery 12 while suppressing variation in the SOC among the first batteries 12.

On the other hand, during regeneration, the battery ECU 20 controls the plurality of DC/DC converters 14 to input power with priority to the first batteries 12 ((N-n) first batteries 12) whose SOCs are less than or equal to the SOC average value SOCave. In this way, it is possible to quickly recover the SOCs of the first batteries 12 whose SOCs are low. Furthermore, since power is input with priority to the (N-n) first batteries 12 with low SOCs, it is possible to suppress the variation in the SOC among the first battery 12 with relatively simple control.

Furthermore, during regeneration, when the power amount capable of being input to the first batteries 12 whose SOCs are less than or equal to the SOC average value SOCave is greater than the regeneration power (regeneration-time requested output Pireq) from the motor 34, the battery ECU 20 controls the plurality of DC/DC converters 14 to input the regeneration power to the first batteries 12 from the motor 34 via the DC/DC converters 14. In this way, it is possible to reliably input power to the first batteries 12 whose SOCs are low.

During regeneration, when the regeneration power from the motor 34 is greater than or equal to the power amount capable of being input to the first batteries 12 whose SOCs are less than or equal to the SOC average value SOCave, the battery ECU 20 controls the plurality of DC/DC converters 14 to input this power amount to the first batteries 12 from the motor 34 via the DC/DC converters 14 and to input a power amount of an excess portion of the regeneration power to the first batteries 12 (n first batteries 12) whose SOCs exceed the SOC average value SOCave. In this way, even when the requested output is large, it is possible to efficiently input the regeneration power to each first battery 12.

Furthermore, in a case where there are a plurality of the first batteries 12 whose SOCs are less than or equal to the SOC average value SOCave, the battery ECU 20 controls the plurality of DC/DC converters 14 to input the same power amount to the plurality of first batteries 12 or to input power amounts corresponding to the output burden rates of the plurality of first batteries 12 for the regeneration power. In this way, it is possible to efficiently input power to the first batteries 12 whose SOCs are low.

The plurality of first batteries 12 may be batteries of the same type, or may be batteries of different types. In this way, it is possible to efficiently utilize the SOC regardless of the type of the first battery 12.

Furthermore, the plurality of first batteries 12 are respectively housed in a plurality of battery packs 28 respectively including BMUs 26 (battery management systems) that monitor the first batteries 12. In this way, these batteries can be easily applied to attachable/detachable batteries.

## Claims

1. A power supply system (10) comprising: a plurality of batteries (12); a plurality of input/output adjustment apparatuses (14) that are electrically connected between the plurality of batteries and a load (34); and a control apparatus (20) that controls input/output of power to/from the plurality of batteries by controlling the plurality of input/output adjustment apparatuses, wherein:
during motoring in which power is output from the plurality of batteries to the load via the plurality of input/output adjustment apparatuses, the control apparatus controls the plurality of input/output adjustment apparatuses to output the power with priority from a battery whose SOC exceeds an SOC average value (SOCave) of the plurality of batteries; and
during the motoring, if a power amount capable of being output from the battery whose SOC exceeds the SOC average value is greater than a requested output (Poreq) of the load, the control apparatus controls the plurality of input/output adjustment apparatuses to output the power from this battery to the load via the input/output adjustment apparatus,
or
during the motoring, if a requested output of the load is greater than or equal to a power amount capable of being output from the battery whose SOC exceeds the SOC average value, the control apparatus controls the plurality of input/output adjustment apparatuses to output just the power amount from this battery to the load via the input/output adjustment apparatus, and to output an insufficient portion of the power amount relative to the requested output from a battery whose SOC is less than or equal to the SOC average value to the load via the input/output adjustment apparatus connected to the battery whose SOC is less than or equal to the SOC average value; and
during regeneration in which power is input from the load to the plurality of batteries via the plurality of input/output adjustment apparatuses, the control apparatus controls the plurality of input/output adjustment apparatuses to input the power with priority to a battery whose SOC is less than or equal to the SOC average value.

2. The power supply system according to claim 1, wherein:
if there are a plurality of the batteries whose SOCs exceed the SOC average value, the control apparatus controls the plurality of input/output adjustment apparatuses to output a same power amount from these plurality of batteries, or to output power amounts corresponding to burden rates of these plurality of batteries for the requested output.

3. The power supply system according to claim 1 or 2, wherein
during the regeneration, if a power amount capable of being input to the battery whose SOC is less than or equal to the SOC average value is greater than a regeneration power (Pireq) from the load, the control apparatus controls the plurality of input/output adjustment apparatuses to input the regeneration power to this battery from the load via the input/output adjustment apparatus.

4. The power supply system according to any one of claims 1 to 3,
wherein
during the regeneration, if a regeneration power from the load is greater than or equal to the power amount capable of being input to the battery whose SOC is less than or equal to the SOC average value, the control apparatus controls the plurality of input/output adjustment apparatuses to input just the power amount from the load to this battery via the input/output adjustment apparatus, and to input a power amount of a residual portion of the regeneration power to a battery whose SOC exceeds the SOC average value.

5. The power supply system according to claim 3 or 4, wherein
if there are a plurality of the batteries whose SOCs are less than or equal to the SOC average value, the control apparatus controls the plurality of input/output adjustment apparatuses to input a same power amount to these plurality of batteries, or to input power amounts corresponding to burden rates of these plurality of batteries for the regeneration power.

6. The power supply system according to any one of claims 1 to 5, wherein
the plurality of batteries are batteries of a same type or are batteries of different types.

7. The power supply system according to any one of claims 1 to 6, wherein
the plurality of batteries are respectively housed in a plurality of battery packs (28) respectively including battery management systems (26) that monitor the batteries.

## Patentansprüche

1. Energie-Versorgungssystem (10), umfassend: eine Mehrzahl von Batterien (12); eine Mehrzahl von Eingabe/Ausgabe-Anpassungsvorrichtungen (14), welche elektrisch zwischen der Mehrzahl von Batterien und einer Last (34) verbunden sind; und eine Steuervorrichtung (20), welche eine Eingabe/Ausgabe von Energie zu/von der Mehrzahl von Batterien steuert, indem die Mehrzahl von Eingabe/Ausgabe-Anpassungsvorrichtungen gesteuert werden, wobei:
während eines Antreibens, in welchem Energie von der Mehrzahl von Batterien zu der Last über die Mehrzahl von Eingabe/Ausgabe-Anpassungsvorrichtungen ausgegeben wird, die Steuervorrichtung die Mehrzahl von Eingabe/Ausgabe-Anpassungsvorrichtungen dazu steuert, die Energie mit Priorität von einer Batterie auszugeben, deren SOC einen SOC-Durchschnittswert (SOCave) der Mehrzahl von Batterien übersteigt; und
während des Antreibens, wenn eine Energiemenge, welche von der Batterie ausgegeben werden kann, deren SOC den SOC-Durchschnittswert übersteigt, größer als eine angefragte Ausgabe (Poreq) der Last ist, die Steuervorrichtung die Mehrzahl von Eingabe/Ausgabe-Anpassungsvorrichtungen dazu steuert, die Energie von dieser Batterie zu der Last über die Eingabe/Ausgabe-Anpassungsvorrichtung auszugeben,
oder
während des Antreibens, wenn eine angefragte Ausgabe der Last größer als oder gleich einer Energiemenge ist, welche von der Batterie ausgegeben werden kann, deren SOC den SOC-Durchschnittswert übersteigt, die Steuervorrichtung die Mehrzahl von Eingabe/Ausgabe-Anpassungsvorrichtungen dazu steuert, gerade die Energiemenge von dieser Batterie zu der Last über die Eingabe/Ausgabe-Anpassungsvorrichtung auszugeben und einen unzureichenden Teil der Energiemenge bezüglich der angefragten Ausgabe von einer Batterie, deren SOC geringer oder gleich dem SOC-Durchschnittswert ist, zu der Last über die Eingabe/Ausgabe-Anpassungsvorrichtung auszugeben, welche mit der Batterie verbunden ist, deren SOC geringer oder gleich dem SOC-Durchschnittswert ist; und
während einer Regeneration, in welcher Energie von der Last zu der Mehrzahl von Batterien über die Mehrzahl von Eingabe/Ausgabe-Anpassungsvorrichtungen eingegeben wird, die Steuervorrichtung die Mehrzahl von Eingabe/Ausgabe-Anpassungsvorrichtungen dazu steuert, die Energie mit Priorität zu einer Batterie einzugeben, deren SOC geringer oder gleich dem SOC-Durchschnittswert ist.

2. Energie-Versorgungssystem nach Anspruch 1, wobei:
wenn eine Mehrzahl der Batterien vorliegen, deren SOCs den SOC-Durchschnittswert übersteigen, die Steuervorrichtung die Mehrzahl von Eingabe/Ausgabe-Anpassungsvorrichtungen dazu steuert, dieselbe Energiemenge von dieser Mehrzahl von Batterien auszugeben oder Energiemengen auszugeben, welche Belastungsraten dieser Mehrzahl von Batterien für die angefragte Ausgabe entsprechen.

3. Energie-Versorgungssystem nach Anspruch 1 oder 2, wobei
während der Regeneration, wenn eine Energiemenge, welche zu der Batterie eingegeben werden kann, deren SOC geringer oder gleich dem SOC-Durchschnittswert ist, größer als eine Regenerationsenergie (Pireq) von der Last ist, die Steuervorrichtung die Mehrzahl von Eingabe/Ausgabe-Anpassungsvorrichtungen dazu steuert, die Regenerationsenergie zu dieser Batterie von der Last über die Eingabe/Ausgabe-Anpassungsvorrichtung einzugeben.

4. Energie-Versorgungssystem nach einem der Ansprüche 1 bis 3, wobei
während der Regeneration, wenn eine Regenerationsenergie von der Last größer oder gleich der Energiemenge ist, welche zu der Batterien eingegeben werden kann, deren SOC geringer oder gleich dem SOC-Durchschnittswert ist, die Steuervorrichtung die Mehrzahl von Eingabe/Ausgabe-Anpassungsvorrichtungen dazu steuert, gerade die Energiemenge von der Last zu dieser Batterie über die Eingabe/Ausgabe-Anpassungsvorrichtung einzugeben und eine Energiemenge eines verbleibenden Teils der Regenerationsenergie zu einer Batterie einzugeben, deren SOC den SOC-Durchschnittswert übersteigt.

5. Energie-Versorgungssystem nach Anspruch 3 oder 4, wobei
wenn eine Mehrzahl der Batterien vorliegen, deren SOCs geringer oder gleich dem SOC-Durchschnittswert sind, die Steuervorrichtung die Mehrzahl von Eingabe/Ausgabe-Anpassungsvorrichtungen dazu steuert, eine selbe Energiemenge zu dieser Mehrzahl von Batterien einzugeben oder Energiemengen entsprechend Belastungsraten dieser Mehrzahl von Batterien für die Regenerationsenergie einzugeben.

6. Energie-Versorgungssystem nach einem der Ansprüche 1 bis 5, wobei
die Mehrzahl von Batterien Batterien desselben Typs sind oder Batterien von unterschiedlichen Typen sind.

7. Energie-Versorgungssystem nach einem der Ansprüche 1 bis 6, wobei
die Mehrzahl von Batterien jeweils in einer Mehrzahl von Batteriepacks (28) aufgenommen sind, welche jeweils Batterie-Verwaltungssysteme (26) umfassen, welche die Batterien überwachen.

## Revendications

1. Système d'alimentation électrique (10) comprenant : une pluralité de batteries (12) ; une pluralité d'appareils de réglage d'entrée/de sortie (14) qui sont reliés électriquement entre la pluralité de batteries et une charge (34) ; et un appareil de commande (20) qui contrôle la fourniture en entrée/en sortie de puissance vers/depuis la pluralité de batteries en contrôlant la pluralité d'appareils de réglage d'entrée/de sortie, dans lequel :
pendant une alimentation pendant laquelle une puissance est fournie en sortie depuis la pluralité de batteries à la charge via la pluralité d'appareils de réglage d'entrée/de sortie, l'appareil de commande contrôle la pluralité d'appareils de réglage d'entrée/de sortie afin de fournir en sortie la puissance en priorité depuis une batterie dont le SOC dépasse une valeur moyenne de SOC (SOCave) de la pluralité de batteries ; et
pendant l'alimentation, si une quantité de puissance qui peut être fournie en sortie depuis la batterie dont le SOC dépasse la valeur moyenne de SOC est supérieure à une sortie demandée (Poreq) de la charge, l'appareil de commande contrôle la pluralité d'appareils de réglage d'entrée/de sortie afin de fournir en sortie la puissance depuis cette batterie à la charge via l'appareil de réglage d'entrée/de sortie,
ou
pendant l'alimentation, si une sortie demandée de la charge est supérieure ou égale à une quantité de puissance qui peut être fournie en sortie depuis la batterie dont le SOC dépasse la valeur moyenne de SOC, l'appareil de commande contrôle la pluralité d'appareils de réglage d'entrée/de sortie afin de fournir en sortie uniquement la quantité de puissance depuis cette batterie à la charge via l'appareil de réglage d'entrée/de sortie, et de fournir en sortie une partie insuffisante de la quantité de puissance par rapport à la sortie demandée depuis une batterie dont le SOC est inférieur ou égal à la valeur moyenne de SOC à la charge via l'appareil de réglage d'entrée/de sortie relié à la batterie dont le SOC est inférieur ou égal à la valeur moyenne de SOC ; et
pendant une régénération au cours de laquelle une puissance est fournie en entrée par la charge vers la pluralité de batteries via la pluralité d'appareils de réglage d'entrée/de sortie, l'appareil de commande contrôle la pluralité d'appareils de réglage d'entrée/de sortie afin de fournir en entrée la puissance en priorité vers une batterie dont le SOC est inférieur ou égal à la valeur moyenne de SOC.

2. Système d'alimentation électrique selon la revendication 1, dans lequel :
si il existe une pluralité de batteries dont les SOC dépassent la valeur moyenne de SOC, l'appareil de commande contrôle la pluralité d'appareils de réglage d'entrée/de sortie afin de fournir en sortie une même quantité de puissance depuis cette pluralité de batteries, ou de fournir en sortie des quantités de puissance qui correspondent aux charges de cette pluralité de batteries pour la sortie demandée.

3. Système d'alimentation électrique selon la revendication 1 ou 2, dans lequel
pendant la régénération, si une quantité de puissance qui peut être fournie en entrée vers la batterie dont le SOC est inférieur ou égal à la valeur moyenne de SOC est supérieure à une puissance de régénération (Pireq) de la charge, l'appareil de commande contrôle la pluralité d'appareils de réglage d'entrée/de sortie afin de fournir en entrée la puissance de régénération vers cette batterie depuis la charge, via l'appareil de réglage d'entrée/de sortie.

4. Système d'alimentation électrique selon l'une quelconque des revendications 1 à 3, dans lequel
pendant la régénération, si une puissance de régénération de la charge est supérieure ou égale à la quantité de puissance qui peut être fournie en entrée vers la batterie dont le SOC est inférieur ou égal à la valeur moyenne de SOC, l'appareil de commande contrôle la pluralité d'appareils de réglage d'entrée/de sortie afin de fournir en entrée uniquement la quantité de puissance, depuis la charge, vers cette batterie via l'appareil de réglage d'entrée/de sortie, et de fournir en entrée une quantité de puissance d'une partie résiduelle de la puissance de régénération vers une batterie dont le SOC dépasse la valeur moyenne de SOC.

5. Système d'alimentation électrique selon la revendication 3 ou 4, dans lequel
si il existe une pluralité de batteries dont les SOC sont inférieurs ou égaux à la valeur moyenne de SOC, l'appareil de commande contrôle la pluralité d'appareils de réglage d'entrée/de sortie afin de fournir en entrée une même quantité de puissance vers cette pluralité de batteries, ou de fournir en entrée des quantités de puissance qui correspondent aux charges de cette pluralité de batteries pour la puissance de régénération.

6. Système d'alimentation électrique selon l'une quelconque des revendications 1 à 5, dans lequel
la pluralité de batteries est composée de batteries d'un même type ou de batteries de différents types.

7. Système d'alimentation électrique selon l'une quelconque des revendications 1 à 6, dans lequel
les batteries sont respectivement contenues dans une pluralité de blocs de batteries (28) comprenant respectivement des systèmes de gestion de batteries (26) qui surveillent les batteries.
